# EUROPÄISCHE PATENTSCHRIFT

(11) **EP 2 331 834 B1**
(45) Veröffentlichungstag und Bekanntmachung des Hinweises auf die Patenterteilung: **07.09.2016**
(21) Anmeldenummer: 09741202.7
(22) Anmeldetag: 09.09.2009
(51) Int. Cl.: F16C 23/04, F16C 23/08

(54) **LAGERELEMENT**
BEARING ELEMENT
ÉLÉMENT DE PALIER

(30) Priorität: 16.09.2008 DE 102008047270
(43) Veröffentlichungstag der Anmeldung: 15.06.2011
(73) Patentinhaber: Schaeffler Technologies AG & Co. KG, 91074 Herzogenaurach (DE)
(72) Erfinder: HAFIT, Ahmed, 97422 Schweinfurt (DE); NAGLIC, Josip, 91097 Oberreichenbach (DE); SCHWEIGERT, Arndt, 90427 Nürnberg (DE)
(86) Internationale Anmeldenummer: PCT/DE2009/001278
(87) Internationale Veröffentlichungsnummer: WO 2010/031382

(56) Entgegenhaltungen:
- EP-A2- 1 640 625
- DE-A1- 2 916 982
- DE-U1-202004 013 251
- US-A- 5 823 687
- US-A1- 2004 202 393

## Beschreibung

### Gebiet der Erfindung

Die Erfindung betrifft ein Lagerelement, welches insbesondere zur Lagerung einer um eine Drehachse drehbaren Welle vorgesehen ist.

### Hintergrund der Erfindung

Ein Lagerelement der eingangs genannten Art findet insbesondere im Rahmen eines Radialgleitlagers Anwendung, Das Lagerelement kann hierbei z.B. bei einem Ruderlager eines Schiffsruders vorgesehen sein.

Ein derartiges Radialgleitlager ist häufig zur Aufnahme von hohen Belastungen bei verhältnismäßig langsamen Dreh- oder Schwenkbewegungen einer gelagerten Welle ausgelegt. Allgemein ist anzumerken, dass bei einem Radialgleitlager das Lagerelement insbesondere zur Aufnahme von Kräften senkrecht zur Drehachse der Welle ausgelegt ist. Die Drehachse der Welle korreliert dabei meist mit der Längsachse der Welle. Das Lagerelement ist hierzu beispielsweise als eine Lagerbuchse ausgestaltet oder umfasst eine derartige Lagerbuchse. Für eine Radialgleitlagerung der Welle ist diese insbesondere in dem z.B. als Lagerbuchse gegebenen Lagerelement über einen Lagerzapfen aufgenommen, der allgemein den in dem Lagerelement laufenden Teil der Welle bezeichnet. Eine Drehbewegung der Welle erfolgt insbesondere mittels einer Gleitbewegung entlang einer entsprechenden Funktionsfläche des Lagerelements. Unter einer Funktionsfläche des Lagerelements wird insbesondere eine Fläche des Lagerelements verstanden, entlang welcher die Gleitbewegung der darin gelagerten Welle bzw. des gelagerten Lagerzapfens erfolgt. Um eine möglichst reibungs- und damit verschleißarme Gleitbewegung zu realisieren, ist die entsprechende Funktionsfläche des Lagerelements häufig mittels eines Schmierstofffilms geschmiert.

Den bekannten Radialgleitlagern gemein ist hierbei die Gefahr einer "Kantenpressung". Bei der Kantenpressung handelt es sich um ein Phänomen, welches häufig auf ein Durchbiegen der Welle oder auf einen Fluchtungsfehler zurückzuführen ist. Ein Fluchtungsfehler tritt insbesondere dann auf, wenn mehrere Lagerelemente zur Lagerung der Welle vorgesehen sind, Um einen einwandfreien Lauf der Welle zu gewährleisten, sollten die Achsen aller Lagerelemente zusammenfallen, also fluchten, andernfalls spricht man von einem Fluchtungsfehler, Aufgrund einer Wellen-Durchbiegung und/oder eines Fluchtungsfehlers liegt die Welle bzw. ihr Lagerzapfen mitunter "schief in dem Lagerelement. "Schief" ist hierbei in Bezug auf eine "ideale" Längsachse/Drehachse der Welle zu sehen. Infolge einer Wellen-Durchbiegung oder eines Fluchtungsfehlers weicht die real positionierte Welle mit ihrer Längsachse aber unter Umständen von einer derartig "idealen" Längsachse um einen gewissen Winkel ab. Bei einer entsprechend starken Schieflage schlägt die Welle an dem Lagerelement, insbesondere im Bereich der Kanten des Lagerelements, an.

Dies kann zur Ausbildung von Druckspitzen im Bereich der Kanten, also zu einer Kantenpressung, führen, was letztlich in einer Schädigung des Lagerelements resultieren kann.

Die EP 1 640 625 A2 und die DE 29 16 982 A1 zeigen Gleitlageranordnungen nach dem Oberbegriff des Anspruchs 1.

### Aufgabe der Erfindung

Der Erfindung liegt die Aufgabe zugrunde, ein möglichst verschleißarme Lagerelement anzugeben.

### Lösung der Aufgabe

Die Aufgabe wird erfindungsgemäß gelöst durch ein Lagerelement, insbesondere zur Lagerung einer um eine Drehachse drehbaren Welle, mit einem sich in Umfangsrichtung erstreckenden Lageraußenring und einem darin angeordneten Lagerzwischenring, welche Lagerringe entlang einer Gleitfläche gleitend zueinander bewegbar sind, wobei der Lagerzwischenring mit einer zum Lageraußenring hin konvex gekrümmten Gleitfläche ausgebildet ist und der Lageraußenring eine dazu im Wesentlichen komplementär gekrümmte Gleitfläche aufweist.

Mit anderen Worten ist zwischen der zu lagernden Welle und dem Lageraußenring ein Lagerzwischenring vorgesehen, der über eine konvexe Gleitfläche dem Lageraußenring angebunden ist. Über diese Anbindung ist das Lagerelement in der Lage, Kräfte abweichend zur Radialrichtung aufzunehmen. Die insbesondere gleitende Lagerung der Welle kann hierbei über den Zwischenring selbst oder über eine eingesetzte, separate Gleitbuche erfolgen. Insbesondere kann auch ein Lagerinnenring vorgesehen sein, der die Welle fest aufnimmt, und der gegenüber dem Lagerzwischenring insbesondere gleitend gelagert ist. Die Erfindung ist dabei aber nicht auf eine gleitende Lagerung der Welle eingeschränkt. Vielmehr kann die Welle in dem Lagerzwischenring oder in einer entsprechenden Buchse auch mittels eines Wälzlagers oder dergleichen geführt sein.

Die Erfindung geht hierbei von der Überlegung aus, dass z.B. eine "Schieflage" der Welle in dem Lagerelement zu einer Schädigung des Lagerelements führen kann, da durch eine derartige Schieflage insbesondere die Ausbildung einer Kantenpressung begünstigt wird, welche unter Umständen zu einer lokalen Verdrängung eines eine Funktionsfläche zwischen dem Lagerelement und der Welle schmierenden Schmierstoffs führt. Insgesamt erwächst aus einer derartigen Kantenpressung letztlich, z.B. infolge eines direkten Materialkontakts zwischen der Welle und dem Lagerelement infolge der mangelhaften Schmierung, ein vorzeitiger Verschleiß der Lagerelements. Bei einer Unterwasser-Anwendung des Lagerelements, bei welcher aus Gründen des Gewässerschutzes auf eine Schmierung mit einem entsprechenden Schmierstoff zunehmend gänzlich verzichtet und statt dessen eine "Schmierung" mit dem Umgebungsmedium Wasser angestrebt wird, ergibt sich die Problematik einer Kantenpressung mitunter in besonderem Maße.

Die Erfindung erkennt nun die überraschend einfache Möglichkeit, einer Schieflage der Welle und den damit verbundenen Folgen durch die Ausgestaltung des Lagerelements als eine Art "2-dimensionales" Kugelgelenk entgegenzuwirken. Hierzu sieht die Erfindung einen Lagerzwischenring mit einer gekrümmten Ausgestaltung der Gleitfläche zum Lageraußenring vor. Die Gleitfläche des Lagerzwischenrings ist hierbei zum Lageraußenrings hin konvex gekrümmt, während der Lageraußenring mit einer dazu im Wesentlichen komplementär gekrümmten Gleitfläche ausgestaltet ist. Die Welle ist über den Lagerzwischenring angebunden, insbesondere direkt oder unter Zwischenlage einer Gleitbuchse darin gelagert. Insbesondere ist die Welle gleittend gelagert, so dass das Lagerelement als ein Radialgleitlager ausgestaltet ist.

Durch den Lagerzwischenring mit gekrümmter Gleitfläche wird das Lagerelement um Achsen senkrecht zur Axialrichtung schwenkbar, und kann insofern Kräfte abweichend zur Radialrichtung aufnehmen. Mit anderen Worten kann die gelagerte Welle im Lagerelement verkippt werden. Im Falle einer Schieflage der Welle in dem Lagerelement wird sich der Lagerzwischenring samt der darin geführten Welle gegenüber dem Lageraußenring über die konvexe Gleitfläche um einige Winkelgrade verstellen, wodurch eine Schieflage der Welle oder ein Fluchtungsfehler ausgeglichen wird. Dadurch wird letztlich einer Kantenpressung und einem hiermit verbundenen vorzeitigen Verschleiß des Lagerelements entgegengewirkt. Eine derartige Vermeidung einer Kantenpressung ermöglicht es insbesondere auch, eine Schmierung des Lagerelements allein auf die Erfordernisse der Anwendungsumgebung sowie auf eine Betriebsoptimierung des Lagerelements abzustimmen, was sich insbesondere auch als vorteilhaft im Hinblick auf eine Unterwasseranwendung des Lagerelements erweist.

Zur eigentlichen Lagerung der Welle, insbesondere im Sinne einer Radikalgleitlagerung, ist hier der Lagerzwischenring vorgesehen. Mit anderen Worten ist die Welle in dem Lagerzwischenring aufgenommen und in diesem insbesondere radial geführt ist. Eine Drehbewegung der Welle erfolgt demgemäß insbesondere gleitend entlang einer entsprechenden Funktionsfläche des Lagerzwischenrings.

Um eine Gleitbewegung zwischen den beiden Lagerringen einerseits, und dem Lagerzwischenring und der Welle andererseits zu begünstigen, kann es beispielsweise vorgesehen sein, auf die Gleitfläche des Lagerzwischenrings und/ oder des Lageraußenringes, sowie auf die Funktionsfläche des Lagerzwischenrings einen entsprechenden Gleitbelag aufzubringen. Alternativ kann es natürlich auch vorgesehen sein, eine Schmierung mittels eines entsprechenden Schmierstoffs, beispielsweise in Form eines Schmieröls, zu gewährleisten. Die letztgenannte Variante ist aus Gründen eines Gewässerschutzes im Rahmen einer Unterwasseranwendung des Lagerelements zumeist als nachteilig zu erachten.
Allgemein versteht man unter der Krümmung einer Kurve eine Richtungsänderung pro Längeneinheit. Die Krümmung einer Kurve in einem Punkt P gibt dabei insbesondere an, wie stark die entsprechende Kurve in der unmittelbaren Umgebung des Punktes P von einer Geraden abweicht. Von einer konstanten Krümmung spricht man, wenn sich an die Kurve in der Umgebung eines beliebigen Berührpunktes stets ein Kreis mit konstantem Radius anschmiegen lässt. Bei einer veränderlichen Krümmung variiert demgemäß ein derartiger Radius in Abhängigkeit von dem Berührpunkt.

Als eine konvexe Krümmung wird hier insbesondere eine nach außen, in Richtung auf das Außenelement, gewölbte Krümmung verstanden. Prinzipiell ist es hier möglich, die Gleitfläche des Lagerzwischenrings mit einer veränderlichen Krümmung auszugestalten. So kann es beispielsweise vorgesehen sein, dass die entsprechende Gleitfläche sich in einem senkrecht zur Umfangsrichtung verlaufenden Schnitt des Lagerelements, als eine Art Spitzbogenprofillinie darstellt. Ein Spitzbogenprofil lässt sich im Wesentlichen durch eine geometrische Figur beschreiben, welche sich aus der Schnittmenge zweier Kreise ergibt, Die Einstichpunkte für den Radius der beiden Kreise liegen hierbei beabstandet voneinander, so dass sich eine spitz zulaufende Profillinie ergibt. Ein Verschwenken des Lagerelements ist hierbei lediglich um eine ausgewiesene Richtung ermöglicht.

Besonders vorteilhaft ist es insofern, den Lageraußenring und den Lagerzwischenring jeweils mit einer in axialer Richtung kreisbogenförmig gekrümmten Gleitfläche auszugestalten. "Kreisbogenförmig" bedeutet insbesondere auch, dass die entsprechenden Gleitflächen in axialer Richtung eine konstante Krümmung besitzen. In einer Schnittebene senkrecht zur Umfangsrichtung stellen sich die entsprechenden Gleitflächen somit jeweils als ein Kreisbogen dar. Eine derartige Ausgestaltung ist im übrigen produktionstechnisch relativ einfach zu realisieren.

In einer weiter bevorzugten Ausgestaltung ist die Rauigkeit der Gleitfläche des Lagerzwischenrings an seiner Außenfläche erhöht. Durch diese Ausgestaltung wird verhindert, dass der Lagerzwischenring an der Gleitfläche zum Lageraußenring bei einer Bewegung der Welle um die durch die Welle definierte Drehachse mitdreht. Durch die Erhöhung der Rauigkeit werden die Gleitkoeffizienten zwischen dem Lageraußen- und dem Lagerzwischenring vergrößert. Es rotiert, insbesondere bei gleicher Materialpaarung zum Lageraußenring und zur Welle, ausschließlich die Welle gegenüber dem Lagerzwischenring.

Zweckmäßigerweise sind der Lageraußenring und der Lagerzwischenring zumindest teilweise aus einem Duplex-Stahl gefertigt. Als einen Duplex-Stahl bezeichnet man einen Stahl, der ein zweiphasiges Gefüge aufweist, welches aus einer Ferrit-(α-Eisen)-Matrix mit Inseln aus Austenit (γ-Eisen) besteht. Die Duplex-Stähle zählen zu den rost- und säurebeständigen Stählen, welche sich beispielsweise durch eine gute Beständigkeit gegenüber einem sog. "Lochfraß" auszeichnen. Bei einem Lochfraß, welcher gelegentlich auch als Lochfraßkorrosion bezeichnet wird, handelt es sich um eine zumeist kleinflächige, aber oft tiefe Korrosion von Metallen, welche sich in einem chloridoder bromidhaltigen Elektrolyten, wie z.B. Meerwasser, befinden. Ein Duplex-Stahl eignet sich daher in besonderer Weise für eine UnterwasserAnwendung des Lagerelements.

Erfindungsgemäß umfasst der Lageraußenring zur Ausbildung der gekrümmten Gleitfläche einen separaten Gleitkörperring mit einem entsprechend gekrümmten Hüllflächenbereich. Als Hüllfläche eines beliebig geformten Körpers bezeichnet man im Allgemeinen die Summe aller den Körper begrenzenden Oberflächen. Der angesprochene Hüllflächenbereich korreliert in dieser Ausgestaltungsvariante mit der gekrümmten Gleitfläche des Lageraußenrings. Der separate Gleitkörperring wird hier beispielsweise in einen Grundkörper des Lageraußenrings eingefügt und in diesen eingepresst oder anderweitig mit diesem verbunden. Durch den separaten Gleitkörperring ist es möglich, den Lageraußenring als solchen, sprich einen entsprechenden Grundkörper, in Hinblick auf das Fertigungsmaterial oder die Form, ohne Konstruktionszwänge zu fertigen. Die gewünscht gekrümmte Form der Gleitfläche wird hier einfach mittels des Gleitkörperrings realisiert. Um die gewünschten Gleiteigenschaften der Gleitfläche des Lageraußenring zu erzielen, ist der separate Gleitkörperring zweckmäßigerweise aus einem Material gefertigt, welches gute Gleiteigenschaften aufweist, also einen geringen Reibungskoeffizienten besitzt. Bei einem derartigen Material kann es sich beispielsweise um einen entsprechenden Kunststoff handeln, Ebenso ist es natürlich möglich, dass das Material des Gleitkörperrings oder auch der Gleitkörperring an sich, einen entsprechenden Schmierstoff eingelagert enthält.

Vorteilhafterweise ist der Gleitkörperring aus einem textilverstärkten Kunststoff, welcher insbesondere einen Schmierstoff eingelagert enthält, gefertigt. Hierzu ist der Gleitkörperring beispielsweise aus einem "Orkot TXMM Marine" gefertigt. "Orkot TXMM Marine" ist eine Produktbezeichnung des Unternehmens "Trelleborg Sealing Solutions Rotherham" und bezeichnet einen textilverstärkten Kunststoff, welcher standardmäßig einen festen Schmierstoff eingelagert enthält. Allgemein zeichnet sich ein textilverstärkter Kunststoff häufig durch eine ausgezeichnete Verschleißfestigkeit aus. Zudem weist ein textilverstärkter Kunststoff, insbesondere im Vergleich mit sonstigen Kunststoffen, nahezu keine Quellung in Wasser auf, was besonders in Hinblick auf eine Unterwasser-Anwendung des Lagerelements von Vorteil ist.

Vorzugsweise ist an einem axialen Randbereich des Gleitkörperrings ein sich dem Lagerzwischenring anschmiegender Dichtungszungenbereich ausgebildet. Mit dieser Ausgestaltungsvariante ist eine Abdichtung, beispielsweise gegenüber dem als Wasser gegebenen Umgebungsmediums, ausgebildet. Somit kann auf ein gesondertes Dichtungselement, z.B. in Form eines Dichtungsrings verzichtet werden. Dies ist unter anderem im Hinblick auf eine einfache Montage von Vorteil. Selbstverständlich kann es auch vorgesehen sein, den Dichtungszungenbereich oder die Dichtungslippe für den Lageraußenring direkt vorzusehen oder dem Lagerzwischenring zuzuordnen.

In einer weiter vorteilhaften Ausgestaltungsvariante ist der Lageraußenring bezüglich einer Radiusebene zweiteilig ausgeführt. Mit der als Radiusebene bezeichneten Ebene wird eine senkrecht zur Drehachse liegende, diese als Flächennormale besitzende, Ebene bezeichnet. Eine derartige Zweiteilung ist besonders vorteilhaft in Hinblick auf eine einfache Montage des Lagerelements. Umfasst der Lageraußenrings einen Gleitkörperring, so bezieht sich in einer weiter vorteilhaften Ausgestaltung die Zweiteilung sowohl auf den Gleitkörperring, als auch auf einen entsprechenden Grundkörper des Lageraußenrings. In diesem Fall wird für eine Montage der zweigeteilte Gleitkörperring beispielsweise einfach in den zweigeteilten Grundkörper des Lageraußenrings eingelegt. Letzterer kann mittels eines Halterungselements, z.B. in Form einer entsprechenden Schraube, lose zusammen gehalten sein. In einer derartigen Vormontage-Position ist es auf einfache Weise möglich, den Grundkörper samt dem Gleitkörperring auf den Lagerzwischenring zu führen, und durch ein einfaches Zusammenschrauben der zweigeteilten Ringe auf diesem zu fixieren.

Vorteilhafterweise umfasst der Lagerzwischenring zur Aufnahme der Welle eine Gleitbuchse, Mittels einer derartigen Gleitbuchse wird eine Radialgleitlagerung der Welle beschaffen wobei die Welle nicht mehr direkt in dem Lagerzwischenring geführt ist, sondern an der der Welle zugewandten Fläche der Gleitbuchse gleitet. In diesem Fall fungiert die der Welle zugewandte Fläche der Gleitbuche als Funktionsfläche, entlang welcher eine Drehbewegung der eingeführten Welle erfolgt. Durch eine geeignete Wahl des Fertigungsmaterials der Gleitbuchse, ist es somit möglich, Einfluss auf die Gleiteigenschaften der Funktionsfläche zu nehmen. Zweckmäßigerweise ist die Gleitbuchse aus einem textilverstärkten Kunststoff, welcher insbesondere einen Schmierstoff eingelagert enthält, gefertigt.

In einer besonders vorteilhaften Ausgestaltungsvariante umfasst der Lagerzwischenring eine Anzahl von sich in radialer Richtung erstreckenden Lagerscheiben oder Lagerringe. Mittels der Lagerscheiben, die dem Lagerzwischenring oder der Gleitbuchse seitlich zugeordnet werden können, ist es auf konstruktiv einfache Weise möglich, ein Axialgleitlager zu realisieren, welches dazu geeignet ist, Axialkräfte aufzunehmen und die Welle in axialer Richtung zu führen. Die Welle kann dabei einen entsprechenden Radiensprung aufweisen, in den der Lagerzwischenring eintaucht, oder es können Wellenmuttern aufgesetzt sein, die axial an den Lagerscheiben geführt sind. Hierbei ist es zweckmäßig, die Lagerscheiben aus einem gut gleitfähigen Material, welches zudem verschleißfest ist, zu fertigen. Vorzugsweise bietet es sich wiederum an, die Lagerscheiben aus einem textilverstärkten Kunststoff, welcher insbesondere einen Schmierstoff eingelagert enthält, zu fertigen. Hier bietet sich erneut beispielsweise ein "Orkot TXMM Marine" an.

### Kurze Beschreibung der Zeichnung

Ausführungsbeispiele der Erfindung werden anhand einer Zeichnung näher erläutert. Dabei zeigen:
- Fig. 1:: ein Lagerelement, und
- Fig. 2:: einen vergrößerten Ausschnitt des Lagerelements.

### Ausführliche Beschreibung der Zeichnung

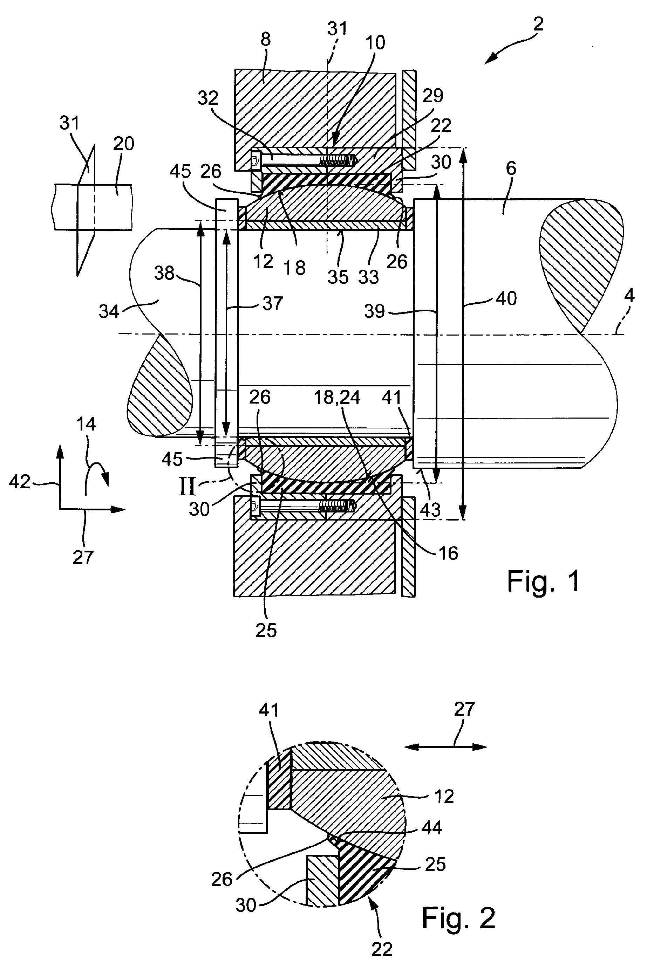

Aus Fig. 1 ist eine Querschnittsdarstellung eines Lagerelements 2 mit einer darin gelagerten, um eine Drehachse 4 drehbaren Welle 6 zu entnehmen. Das Lagerelement 2 ist hier insbesondere für einen Einsatz vorwiegend unter Wasser, beispielsweise unter Meerwasser, vorgesehen. Hierbei findet das Lagerelement 2 beispielsweise im Rahmen eines Ruderlagers eines Schiffsruders Einsatz. Das Lagerelement 2 ist hierzu in ein entsprechendes Gehäuse 8 eingeführt und in diesem fixiert.

Gemäß der Darstellung umfasst das Lagerelement 2 einen Lageraußenring 10 sowie einen darin angeordneten Lagerzwischenring 12. Die Welle 6 ist hierbei in dem Lagerzwischenring 12 aufgenommen und gleitend geführt.

Sowohl der Lageraußenring 10 als auch der Lagerzwischenring 12, welche im Folgenden gelegentlich einfach als Lagerringe 10,12 bezeichnet werden, erstrecken sich entlang einer Umfangsrichtung 14. Die Lagerringe 10,12 sind über Gleitflächen 16,18 zueinander gleitend bewegbar.

Wie aus den durch die Drehachse 4 verlaufenden Querschnitt gut zu entnehmen ist, ist die Gleitfläche 16 des Lagerzwischenrings 12 zum Lageraußenring 10 hin konvex gekrümmt. Die Gleitfläche 18 des Lageraußenrings 10 ist mit einer dazu komplementären Krümmung ausgestaltet.

Durch die gekrümmte Ausgestaltung der Gleitflächen 16,18 wird ein Kugelgelenk realisiert, wodurch der Lagerzwischenring 12, einschließlich der darin aufgenommenen Welle 6, gegenüber dem in dem Gehäuse 8 fixierten Lageraußenring 10 in die Drehachse 4 umfassenden Ebenen 20 schwenkbar wird. Dabei gleitet die Gleitfläche 16 des Lagerzwischenrings 12 an der Gleitfläche 18 des Lageraußenrings entlang, Durch ein derartiges Gelenk wird das Lagerelement 2 in die Lage versetzt, Kräfte abweichend zur Radialrichtung aufzunehmen. Beispielsweise wird durch eine Verschwenkung des Lageraußenrings 10 gegenüber dem Lagerzwischenring 12 eine Neigung der in dem Lagerzwischenring 12 aufgenommenen Welle 6 ausgeglichen. Dadurch kann insbesondere einer sog. "Kantenpressung", welche mitunter zu einer nachhaltigen Schädigung des Lagerelements 2 führt, entgegengewirkt werden. Durch das Vorsehen des ausgebildeten Gelenks wird insofern einem vorzeitigen Verschleiß des Lagerelements 2 entgegengewirkt.

Zur Ausbildung der gekrümmten Gleitfläche 18 umfasst der Lageraußenring 10 hier einen separaten Gleitkörperring 22, welcher einen entsprechend gekrümmten Hüllflächenbereich 24 besitzt. An einem axialen Randbereich 25 des Gleitkörperrings 22, welcher insbesondere aus einem "Orkot TXMM Marine" gefertigt ist, ist ein Dichtungszungenbereich 26 ausgebildet, welcher sich dem Lagerzwischenring 12 anschmiegt. "Axial" bezieht sich insbesondere auf eine axiale Richtung 27. Durch den in Form von Dichtlippen ausgeführten Dichtungszungenbereich 26 ist eine Abdichtung, beispielsweise gegenüber dem als Wasser gegebenen Umgebungsmedium, ausgebildet. Somit kann auf ein gesondertes Dichtungselement, z.B. in Form eines Dichtungsrings, verzichtet werden. Dies ist insbesondere im Hinblick auf eine vereinfachte Montage von Vorteil. Eine vergrößerte Darstellung des Dichtungszungenbereichs 26 kann Fig. 2 entnommen werden,

Wie aus Fig. 1 zu entnehmen ist, ist der Gleitkörperring 22 in einen Grundkörper 29 des Lageraußenrings 10 eingefügt. Der Grundkörper 29 ist hierzu mit radialen Umlaufstegen 30 ausgeführt, so dass sich eine "topfartige" Vertiefung ergibt, in welche der Gleitkörperring 22 eingesetzt ist. In dem Ausführungsbeispiel ist der Lageraußenring 10, also sowohl der Grundkörper 29, als auch der Gleitkörperring 22, bezüglich einer Radiusebene 31 zweiteilig ausgeführt. Eine derartige Zweiteilung des Lageraußenrings 10 vereinfacht die Montage des Lageraußenrings 10 auf den Lagerzwischenring 12 erheblich: Für eine entsprechende Montage wird zunächst der Gleitkörperring 22 einfach in den Grundkörper 29 eingelegt. Der Grundkörper 29 ist hier anfangs mittels einer Schraube 32 lose zusammengehalten. In einer derartigen Vormontage-Position ist es möglich, den Grundkörper 29 samt dem Gleitkörperring 22 auf einfache Weise auf den Lagerzwischenring 12 zu führen und durch ein einfaches Anziehen der Schraube 32 kann auf diesen zu pressen".

Wie aus der Darstellung weiter ersichtlich, ist die Welle 6 in dem Lagerelement 2 im Wesentlichen über den Lagerzwischenring 12 gelagert. Hierzu umfasst der Lagerzwischenring 12 eine sich in axialer Richtung 27 erstreckende Gleitbuchse 33. In dieser Gleitbuchse 33 ist die Welle 6, insbesondere mit ihrem Lagerzapfen 34, aufgenommen. Durch die Gleitbuchse 33 wird eine Radialgleitlagerung der Welle 6 geschaffen, wobei die Welle 4 nicht direkt in dem Lagerzwischenring 12 sondern in der Gleitbuchse 33 gleitend gelagert ist. Dies ermöglicht es, die Materialauswahl hinsichtlich der gewünschten Eigenschaften zu optimieren. Die der Welle 6 zugewandte Fläche der Gleitbuchse 33 fungiert somit als Funktionsfläche 35 des Lagerzwischenrings 12, entlang welcher eine Drehung der Welle 6 mittels einer Gleitbewegung erfolgt.

Die Grundkörper 29 des Lageraußenrings 10 sowie der konvexe Gleitkörper des Lagerzwischenrings sind vorliegend aus einem sogenannten Duplex-Stahl gefertigt. Die Verwendung eines Duplex-Stahls bietet sich gerade wegen seiner hohen Beständigkeit gegen eine "Lochfraßkorrosion" für die vorgesehene Unterwasser-Anwendung des Lagerelements 2 an. Die Gleitflächen des Lagerzwischenrings 12 zum Lageraußenring 10 und zur Welle 4 sind über den Gleitkörperring 22 bzw. die Gleitbuchse 35 gebildet, die beide aus einem textilverstärkten Kunststoff, insbesondere aus "Orkat TXMM Marine", gefertigt. Um ein Rotieren des Lagerzwischenrings 12 gegenüber dem Lageraußenring 10 zu verhindern, ist die Gleitfläche 16 des Lagerzwischenrings 12 aufgerauht.

In dem konkreten Ausführungsbeispiel besitzt die Gleitbuchse 33 einen Innendurchmesser 37 von etwa 180mm sowie einen Außendurchmesser 38 von etwa 200mm, bei einem Außendurchmesser 39 des Lagerzwischenrings 12 von 250mm, und einem Außendurchmesser 40 des Lageraußenrings 10 von über 300mm.

Für eine axiale Lagerung der Welle 6 umfasst der Lagerzwischenring 12 eine Anzahl von Lagerscheiben 41, welche sich in radialer Richtung 42 erstrecken. Zumindest ein Teil der Lagerscheiben 41 ist lose und wird hauptsächlich mittels eines Druckbundes 43 der Welle 6 an den Lagerzwischenring 12 gepresst. Anstelle des Druckbundes 43 kann auch eine Wellenmutter 45 der Welle 4 aufgeworfen sein, wie sie am linken Abschnitt der Welle 4 eingezeichnet ist, um eine axiale Lagerung der Welle 4 zu erzielen.

In Fig. 2 ist ein vergrößerter Ausschnitt des Lagerelements 2 gemäß Fig. 1 zu sehen. In Fig. 2 ist der Dichtungszungenbereich 26 des Gleitkörperrings 22 erkennbar, außerdem ist u. a. auch ein Ausschnitt des Lagerzwischenrings 12 zu sehen.

Deutlich ist in Fig. 2 zu erkennen, wie sich der Dichtungszungenbereich 26, welcher an einem axialen Randbereich 25 des Gleitkörperrings 22 ausgebildet ist, sich dem Lagerzwischenring 12 anschmiegt. Wie aus der vergrößerten Darstellung ersichtlich wird, schmiegt sich der Dichtungszungenbereich 26 unter Beibehaltung einer Nut 44 an den Lagerzwischenring 12. Mittels einer derartigen Nut 44 ist es beispielsweise möglich, die Tragfähigkeit eines Radialgleitlagers zu beeinflussen.

**Liste der Bezugszahlen**

| | | | |
|---|---|---|---|
| 2 | Lagerelement | 45 | Wellenmutter |
| 4 | Drehachse | | |
| 6 | Welle | | |
| 8 | Gehäuse | | |
| 10 | Lageraußenring | | |
| 12 | Lagerzwischenring | | |
| 14 | Umgangsrichtung | | |
| 16 | Gleitfläche | | |
| 18 | Gleitfläche | | |
| 20 | Ebene | | |
| 22 | Gleitkörperring | | |
| 24 | Hüllflächenbereich | | |
| 25 | Randbereich | | |
| 26 | Dichtungszungenbereich | | |
| 27 | axiale Richtung | | |
| 29 | Grundkörper | | |
| 30 | Steg | | |
| 31 | Radiusebene | | |
| 32 | Schraube | | |
| 33 | Gleitbuchse | | |
| 34 | Lagerzapfen | | |
| 35 | Funktionsfläche | | |
| 37 | Innendurchmesser -Buchse | | |
| 38 | Außendurchmesser -Buchse | | |
| 39 | Außendurchmesser -Innenring | | |
| 40 | Außendurchmesser -Außenring | | |
| 41 | Lagerscheiben | | |
| 42 | radiale Richtung | | |
| 43 | Druckbund | | |
| 44 | Nut | | |

## Patentansprüche

1. Lagerelement (2), insbesondere zur Lagerung einer um eine Drehachse (4) drehbaren Welle (6), mit einem sich in Umfangsrichtung (14) erstreckenden Lageraußenring (10) und einem darin angeordneten Lagerzwischenring (12), welche Lagerringe (10,12) entlang einer Gleitfläche (16,18) gleitend zueinander bewegbar sind, wobei der Lagerzwischenring (12) mit einer zum Lageraußenring (10) hin konvex gekrümmten Gleitfläche (16) ausgebildet ist und wobei der Lageraußenring (10) eine dazu im Wesentlichen komplementär gekrümmte Gleitfläche (18) aufweist, **dadurch gekennzeichnet, dass** der Lageraußenring (10) zur Ausbildung der gekrümmten Gleitflächen (18) einen separaten Gleitkörperring (22) mit einem entsprechend gekrümmten Hüllflächenbereich (24) umfasst.

2. Lagerelement (2) nach Anspruch 1,
wobei der Lageraußenring (10) und der Lagerzwischenring (12) jeweils mit einer in axialer Richtung kreisbogenförmig gekrümmten Gleitfläche (16,18) ausgestaltet sind.

3. Lagerelement (2) nach Anspruch 1 oder 2,
wobei die Rauigkeit der Gleitfläche (16) des Lagerzwischenrings (12) an seiner Außenfläche (16), insbesondere gegenüber seiner Innenfläche, erhöht ist.

4. Lagerelement (2) nach einem der vorhergehenden Ansprüche,
wobei der Lageraußenring (10) und der Lagerzwischenring (12) zumindest teilweise aus einem Duplex-Stahl gefertigt sind.

5. Lagerelement (2) nach einem der vorhergehenden Ansprüche,
wobei der separate Gleitkörperring (22) aus einem textilverstärkten Kunststoff, welcher insbesondere einen eingelagerten Schmierstoff enthält, gefertigt ist.

6. Lagerelement (2) nach einem der vorhergehenden Ansprüche,
wobei an einem axialen Randbereich (25) des separaten Gleitkörperrings (22) ein sich dem Lagerzwischenring (12) anschmiegender Dichtungszungenbereich (26) ausgebildet ist.

7. Lagerelement (2) nach einem der vorhergehenden Ansprüche,
wobei der Lageraußenring(10) bezüglich einer Radiusebene (31) zweiteilig ausgeführt ist.

8. Lagerelement (2) nach einem der vorhergehenden Ansprüche,
wobei der Lagerzwischenring (12) zur Aufnahme der Welle (6) eine Gleitbuchse (33) umfasst.

9. Lagerelement (2) nach Anspruch 8,
wobei die Gleitbuchse (33) aus einem textilverstärkten Kunststoff, welcher insbesondere einen eingelagerten Schmierstoff enthält, gefertigt ist.

10. Lagerelement (2) nach einem der vorhergehenden Ansprüche,
wobei der Lagerzwischenring (12) eine Anzahl von sich in radialer Richtung (42) erstreckenden, seitlichen Lagerscheiben (41) umfasst.

11. Lagerelement (2) nach Anspruch 10,
wobei die Lagerscheiben (41) aus einem textilverstärkten Kunststoff, welcher insbesondere einen eingelagerten Schmierstoff enthält, gefertigt sind.

## Claims

1. Bearing element (2), in particular for mounting a shaft (6) which can be rotated about a rotational axis (4), having a bearing outer ring (10) which extends in the circumferential direction (14) and a bearing intermediate ring (12) which is arranged therein, which bearing rings (10, 12) can be moved in a sliding manner with respect to one another among a sliding face (16, 18), the bearing intermediate ring (12) being configured with a sliding face (16) which is curved convexly towards the bearing outer ring (10), and the bearing outer ring (10) having a sliding face (18) which is curved in a substantially complementary manner with respect thereto, **characterized in that**, in order to configure the curved sliding face (18), the bearding outer ring (10) comprises a separate sliding body ring (22) with a correspondingly curved enveloping surface region (24).

2. Bearing element (2) according to Claim 1, the bearing outer ring (10) and the bearing intermediate ring (12) being configured in each case with a sliding face (16, 18) which is curved arcuately in the axial direction.

3. Bearing element (2) according to Claim 1 or 2, the roughness of the sliding face (16) of the bearing intermediate ring (12) being increased on its outer face (16), in particular in comparison with its inner face.

4. Bearing element (2) according to one of the preceding claims, the bearing outer ring (10) and the bearing intermediate ring (12) being manufactured at least partially from a duplex steel.

5. Bearing element (2) according to one of the preceding claims, the separate sliding body ring (22) being manufactured from a textile-reinforced plastic which contains, in particular, an embedded lubricant.

6. Bearing element (2) according to one of the preceding claims, a gasket tongue region (26) which bears tightly against the bearing intermediate ring (12) being configured on an axial edge region (25) of the separate sliding body ring (22).

7. Bearing element (2) according to one of the preceding claims, the bearing outer ring (10) being of two-piece configuration with regard to a radius plane (31).

8. Bearing element (2) according to one of the preceding claims, the bearing intermediate ring (12) comprising a sliding bush (33) for receiving the shaft (6).

9. Bearing element (2) according to Claim 8, the sliding bush (33) being manufactured from a textile-reinforced plastic which contains, in particular, an embedded lubricant.

10. Bearing element (2) according to one of the preceding claims, the bearing intermediate ring (12) comprising a number of lateral bearing plates (41) which extend in the radial direction (42).

11. Bearing element (2) according to Claim 10, the bearing plates (41) being manufactured from a textile-reinforced plastic which contains, in particular, an embedded lubricant.

## Revendications

1. Elément de palier (2), en particulier pour le support d'un arbre (6) pouvant tourner autour d'un axe de rotation (4), avec une bague extérieure de palier (10) s'étendant en direction périphérique (14) et une bague intermédiaire de palier (12) agencée dans celle-ci, ces bagues de palier (10, 12) pouvant se déplacer l'une par rapport à l'autre en glissant le long d'une surface de glissement (16, 18), dans lequel la bague intermédiaire de palier (12) est configurée avec une surface de glissement (16) courbe convexe vers la bague extérieure de palier (10) et dans lequel la bague extérieure de palier (10) présente une surface de glissement (18) de courbure essentiellement complémentaire à celle-ci, **caractérisé en ce que** la bague extérieure de palier (10) comprend, pour la formation de la surface de glissement courbe (18), une bague de corps de glissement séparée (22) avec une région de surface d'enveloppe (24) de courbure correspondante.

2. Elément de palier (2) selon la revendication 1, dans lequel la bague extérieure de palier (10) et la bague intermédiaire de palier (12) sont respectivement configurées avec une surface de glissement courbe (16, 18) en forme d'arc de cercle en direction axiale.

3. Elément de palier (2) selon la revendication 1 ou 2, dans lequel la rugosité de la surface de glissement (16) de la bague intermédiaire de palier (12) est augmentée sur sa surface extérieure (16), en particulier par rapport à sa surface intérieure.

4. Elément de palier (2) selon l'une quelconque des revendications précédentes, dans lequel la bague extérieure de palier (10) et la bague intermédiaire de palier (12) sont fabriquées au moins en partie en un acier duplex.

5. Elément de palier (2) selon l'une quelconque des revendications précédentes, dans lequel la bague de corps de glissement séparée (22) est fabriquée en une matière plastique renforcée de textile, qui contient en particulier un lubrifiant incorporé.

6. Elément de palier (2) selon l'une quelconque des revendications précédentes, dans lequel une région de languette d'étanchéité (26) épousant la bague intermédiaire de palier (12) est formée sur une région de bord axiale (25) de la bague de corps de glissement séparée (22).

7. Elément de palier (2) selon l'une quelconque des revendications précédentes, dans lequel la bague extérieure de palier (10) est réalisée en deux parties par rapport à un plan radial (31).

8. Elément de palier (2) selon l'une quelconque des revendications précédentes, dans lequel la bague intermédiaire de palier (12) comprend une douille de glissement (33) destinée à recevoir l'arbre (6).

9. Elément de palier (2) selon la revendication 8, dans lequel la douille de glissement (33) est fabriquée en une matière plastique renforcée de textile, qui contient en particulier un lubrifiant incorporé.

10. Elément de palier (2) selon l'une quelconque des revendications précédentes, dans lequel la bague intermédiaire de palier (12) comprend un nombre de rondelles de palier (41), qui s'étendent en direction radiale (42).

11. Elément de palier (2) selon la revendication 10, dans lequel les rondelles de palier (41) sont fabriquées en une matière plastique renforcée de textile, qui contient en particulier un lubrifiant incorporé.
